# EUROPEAN PATENT SPECIFICATION

(11) **EP 3 199 932 B1**
(45) Date of publication and mention of the grant of the patent: **28.11.2018**
(21) Application number: 17153531.3
(22) Date of filing: 27.01.2017
(51) Int. Cl.: G01K 17/06, G01K 17/10

(54) **CONSUMPTION METER WITH ADAPTIVE MEASUREMENT FREQUENCY**
VERBRAUCHSMESSER MIT ADAPTIVER MESSFREQUENZ
COMPTEUR DE CONSOMMATION AVEC FRÉQUENCE DE MESURE ADAPTATIVE

(30) Priority: 28.01.2016 EP 16153054
(43) Date of publication of application: 02.08.2017
(73) Proprietor: Kamstrup A/S, 8660 Skanderborg (DK)
(72) Inventor: Nielsen, Søren Tønnes, 8355 Solbjerg (DK); Jensen, Mads Erik Lund, 8840 Rødkærsbro (DK); Savolainen, Juha-Matti, 8541 Skødstrup (DK)
(74) Representative: Plougmann Vingtoft a/s

(56) References cited:
- WO-A2-2005/055017
- CN-Y- 201 237 539

## Description

### FIELD OF THE INVENTION

The present invention relates to an energy consumption meter and a method for measuring a consumed energy at a consumer site with an adaptive scheme to control measurement frequency of temperature and/or flow rate to combine high measurement precision and a long battery lifetime.

### BACKGROUND OF THE INVENTION

A consumption meter may be used for measuring utility usage, e.g. in connection with charging of a consumed energy for heating or cooling delivered by a fluid, e.g. a liquid.

CN 2012 37539 Y discloses a consumption meter comprising a flow rate and temperature measurement; the sampling rate depends on the flow rate. WO 2005/055017 discloses an electric gas meter; sampling is carried out quasi-periodically.

Such meters are traditionally battery powered, and their lifetime is likely defined by the lifetime of the battery. The lifetime of the battery of a consumption meter may be as long as 10 or even 15 years or more. To achieve such long lifetime, close control of the battery's energy consumption is required. The energy consumption relates to two main activities of the consumption meter: Provision and transmission of utility data. With the activity of utility data provision, utility data are recorded such a by measuring a flow rate and temperatures, and further processed to provide data on the actual consumption of the utility by the consumer. With the transmission of utility data, the processed data are transmitted from the consumption meter to a main collector of the utility network, such as by wireless radio frequency transmission to the main collector.

Another aspect relating to energy consumption of a consumption meter relates to the flow rate measurement frequency. Thus the ultego III smart heat meter ista applies an adaptive temperature measurement scheme according to which the heat meter in case of sudden increases in the flow rate increases the temperature measurement frequency so as to measure the temperature at a higher measurement frequency, *i.e.* more often. Whenever the temperature is stabilized, or after at least 2 minutes, the heat meter returns to the original lower measurement frequency.

Such higher measurement frequency, however, is likely to jeopardize the long-term energy consumption of the consumption meter.

Hence there is a need for a consumption meter which allows a close control of the battery's energy consumption of the consumption meter, while still allowing close monitoring of the utility flow rate even under conditions of sudden changes of the flow rate.

### SUMMARY OF THE INVENTION

Accordingly it would be advantageous to achieve an energy consumption meter (heating or cooling meter) to fulfil the above need for a high measurement precision under various operating conditions, and still ensuring a long lifetime of its internal power source. In general, the invention preferably seeks to mitigate, alleviate or eliminate one or more of the above mentioned disadvantages of the prior art.

Accordingly, in a first aspect, the invention provides a consumption meter, e.g. a heat or cooling meter, for measuring energy consumption of a fluid supplied to a consumer at a consumer site, the consumption meter comprising:
- a flow measuring unit for measuring a flow rate of the supplied fluid,
- a temperature measuring unit for measuring inlet and outlet temperatures of the supplied fluid,
- a calculator unit for receiving data from the flow measuring unit and the temperature measuring unit and being arranged for calculating a measure of energy consumption of the fluid supplied to the consumer accordingly,
- a self-contained power source, preferably a battery, arranged for supplying electric power to at least the temperature measuring unit and the calculator unit and,
wherein the consumption meter is arranged to repeatedly:
- measure the flow rate with a flow rate measurement frequency,
- determine a measure of change in at least one of: 1) the flow rate, and 2) the inlet or outlet temperatures,
- calculate a measure of power source energy balance,
- determine a temperature measurement frequency temperature measurement frequency (TMF) in response to said measure of change and the measure of power source energy balance,
- measure the inlet and outlet temperatures with the TMF, and
- calculate a measure of energy consumption of the fluid supplied to the consumer according to the measured flow rate and the measured inlet and outlet temperatures.

With such consumption meter, it is possible to obtain a high measurement precision also in case of rapidly changing fluid flow and/or temperature, and still it is possible to ensure a long battery lifetime. By adaptively adjusting TMF in response to e.g. a percentage change in flow rate, it is possible to allow a temporary high TMF to allow precise tracking of rapid changes in inlet and outlet fluid temperatures. Still, the TMF is determined also in response to an updated power source energy balance, which allows taking into account the extra electric power needed to measure at a high TMF. In the step of determining the temperature measurement frequency, e.g. involving a calculation according to a predetermined algorithm, several different implementations may be provided to take into account the power source energy balance when responding to the change in flow rate.

The invention is based on the insight that changes in the flow rate provide strong indications of changes in the energy flow rate, which according to this embodiment may be monitored closely.

Especially, such an algorithm for determining TMF may calculate a TMF value to be used in the temperature measurement unit. Such algorithm may be arranged to lower the sensitivity to increase TMF in response to the power balance indicating a "low" power account. E.g., if the power balance is "high", a flow rate change of 100% may result in a TMF calculated to 0.5 Hz, while if the same flow rate change of 100% may result in a TMF calculated to 1 Hz, if the power balance is "low". Especially, the power balance may be repeatedly updated, e.g. once every time period (e.g. 1 second), by updating a "power account" by adding a budgeted average power available per time period and correcting the "power account" by subtracting a value indicative of estimated power to perform a temperature measurement at the actual TMF. This allows the budgeted average power available per time period to be a pre-calculated value designed to ensure a predetermined lifetime of the battery, given a known energy of the battery. Thus, by complying with such power balance, and providing a minimum TMF which allows power saving compared to the budgeted average power available per time period, the battery lifetime can be ensured. Still, allowing determining also a maximum TMF significantly higher than the minimum TMF, a high measurement precision is possible in limited time periods where the fluid flow conditions indicate a high flow rate change. Such periods with a high rate of power used for temperature measurements can be compensated for in time periods with a steady flow, where a predetermined minimum TMF can be determined, thereby staying in a "eco" mode of operation, and saving battery power.

It is preferred, that the power source energy balance referred to is calculated and updated on a short time basis rather than updating an energy balance based on the full expected battery energy. This allows the adaptive scheme to function also in case the battery is replaced without the need to adjust the adaptive algorithm accordingly.

The consumption meter may be compact meter where the flow measuring unit, the temperature measuring unit and the calculator unit are contained in one single unit, or in other versions the flow measuring unit may form a separate unit wired or wirelessly connected to communicate the measured flow rate to the calculator unit. The flow measuring unit is in all embodiments preferably based on ultrasound measurement technique. The temperature measurement unit preferably comprises separate inlet and outlet sensors in wired or wireless connection with a temperature measurement circuit comprising an ADC for reading the temperatures at the TMF.

In the context of the present invention, the "self-contained power source" of the consumption meter should be understood as an internal power source for operating the consumption meter, such as a battery, which may be a primary battery, *i.e.* a non-rechargeable battery, or a secondary battery, *i.e.* a rechargeable battery, or it may be a capacitor, or a combination thereof. The power source may comprise a solar cell or fuel cell alternative to or in addition to a battery.

For clarification, in the context of the present invention, the "energy" of the "energy flow rate" should be distinguished from the "energy" of the "power source energy". Thus, whereas the former relates to the utility supplied to a utility consumer and being measured by means of the subject consumption meter, the latter relates to the power source of the consumption meter, such as a battery of the consumption meter, for powering all of or at least some of the consumption meter.

In the context of the present invention, the term "measurement frequency" is to be understood as the rate with which measurements are made or the number of measurements per unit of time, such as one measurement per minute, *i.e.* one measurement every minute, or one measurement every 20th second, *i.e.* three measurements per minute, or one measurement every second which is the same as a measurement frequency of 1 Hz. The step of determining TMF may involve an algorithm calculating a TMF with a given resolution, or it may involve selecting one of a set of a plurality of possible TMFs between a minimum TMF and a maximum TMF.

By the term "repeatedly" is understood that the mentioned steps are performed recursively, e.g. a fixed rate. However, it is to be understood that the different steps may be performed at different rates, e.g. temperatures are measured with the TMF, while flow rate is measured at a flow rate measurement frequency (FMF) which can be different. Further, flow rate change detection for determining flow rate change for use in determining TMF may be detected by a separate method, i.e. separately from the high precision measurements of flow rate used for the calculation of the consumed energy. The flow rate change may be detected with a (significant) lower precision than the precision measurement of flow rate, but with a higher measurement frequency, so as to allow catching of sudden flow rate changes which is then used for the determining of a higher TMF. E.g. such coarse flow rate change detection frequency may be selected to be 0.5-2 Hz, e.g. 1 Hz, and the step of determining TMF may be selected to be 1 Hz, while TMF and FMF may be selected otherwise. Still further, the calculation of consumed energy may be performed at a separate rate, e.g. only once both temperatures and flow rate data have been updated, however it may also be performed e.g. at a fixed rate which is higher than that.

Application of lower TMF compared to FMF has at least two advantages in terms of power source energy saving: First, compared to the flow rate, with a heating or cooling utility, the utility temperature is likely to vary more slowly. To save energy without compromising the measurement quality, it is therefore appropriate to measure the temperature at a lower measurement frequency than the flow rate, *i.e.* to focus on the most volatile parameter. Second, with most consumption meters, conducting a temperature measurement consumes more energy than does conducting a flow rate measurement. Accordingly, saving temperature measurements accounts for higher overall energy savings than does saving flow rate measurements.

Applying different measurement frequencies with temperature and flow rate measurements, a specific scheme is preferably adopted when combining the two types of data. Thus according to an embodiment, calculating the consumed energy as the product of the latest measured flow rate and the latest measured inlet and outlet temperatures. Especially, whenever temperature measurements and flow rate measurements are not synchronized, a measure of the consumed energy may be the product of the latest, *i.e.* the most recent of each of the measured flow rate and temperature. Per example, three flow rate measurements values at t=1 min., t=2 min., and t=3 min. of 10 l/min., 12 l/min. and 15 l/min., respectively, may, in the absence of any temperature measurements since t = 0 min., be combined with a single measured temperature of 60 °C at t = 0 min. Thus, measures of the energy flow rate at t = 1 min., t = 2 min., and t = 3 min. may be calculated as 600 l*°C/min, 720 l*°C/min, and 900 l*°C/min, respectively, *i.e.* combining the flow rate as t = 1 min. and the temperature at t = 0 min., the flow rate as t = 2 min. and the temperature at t = 0 min., etc.

In the following, preferred embodiments and features of the invention will be described.

The TMF may be determined, e.g. calculated as a value, in response to the measure of change in the flow rate and the measure of power source energy balance. Especially, the TMF may be calculated according to a predetermined algorithm in response to only the measure of change in the flow rate and the measure of power source energy balance. However, both of the measure of change in the flow rate, and a measure of change in the inlet or outlet temperatures (or specifically a difference in inlet and outlet temperatures) may be taken into account in the algorithm determining the TMF. Based on the insight of the inventors, the algorithm is preferably based on the measure of change in the flow rate, such as based on the measure of change in the flow rate only together with the measure of PB. However, it is to be understood that the algorithm may alternatively be based on the measure of change in the inlet or outlet temperatures only together with the measure of PB, or alternatively the algorithm may be based on the measure of PB and both of the measure of change in temperatures and the change in flow rate.

The change in flow rate may be calculated as the percentage change in two consecutive flow rate measurements.

The PB may be calculated in response to a measure of budgeted average power source energy consumption and a measure of estimated power source energy consumption with the determined TMF. Especially, the measure of budgeted average power source energy consumption may be a predetermined fixed value corresponding to a desired minimum life time of the consumption meter with the self-contained power source. This allows the PB to reflect the expected lifetime of the power source (battery), and allows keeping track of the energy drawn from the power source, thereby allowing a power balance account to influence at least one parameter controlling how the TMF is calculated in response to a given flow rate change. Especially, the PB may be used to influence the sensitivity to respond to a given flow rate change.

The TMF is preferably determined to be below or equal to a maximum TMF, such as a maximum TMF within the range 0.1 Hz to 2 Hz, such as within the range 0.2 Hz to 1 Hz, and wherein said maximum TMF is selected such that an estimated power source energy consumption with the maximum. The maximum TMF may be a fixed predetermined value, of it may be determined repeatedly in response to the PB, especially if the TMF exceeds a budgeted average power source energy consumption.

The TMF is preferably determined to be above or equal to a minimum temperature measurement frequency, such as a minimum temperature measurement frequency within the range 0.01 Hz to 0.1 Hz, such as within the range 0.015 Hz to 0.05 Hz, and wherein said minimum measurement frequency is selected such that a budgeted average power source energy consumption exceeds an estimated power source energy consumption with the minimum temperature measurement frequency.

The TMF may be determined among at least three different TMF values. E.g. the TMF may be selected from a plurality of predetermined TMF values, or the TMF value may be directly calculated by an algorithm, e.g. as an integer value indicative of temperature measurement period time in seconds.

Most preferably, the TMF can be determined to at least one TMF value which provides a power consumption from the power source which is below a budgeted average power consumption.

The consumption meter may further be arranged to repeatedly determine a flow rate measurement frequency in response to the measure of change in the flow rate and the measure of power source energy balance.

Preferably, the TMF is repeatedly determined with a fixed time interval, such as at least once every 10 seconds, such as at least once every 5 seconds, such as once every second.

The measure of change in at least one of: 1) the flow rate, and 2) the inlet or outlet temperatures is preferably updated at a higher rate than or equal to the FMF and the TMF.

The measure of power source energy balance is preferably repeatedly calculated at least once every 10 seconds, such as at least once every 5 seconds, such as once every second, such as at least once every 0.5 seconds, preferably at a fixed time interval. Especially, such fixed time interval may be synchronized or may not be synchronized with one of or both of the TMF and FMF.

It is preferred that the TMF is determined according to an algorithm wherein a sensitivity to increase the TMF in response to the change in the at least one of: 1) the flow rate, and 2) the inlet or outlet temperatures is adjusted in response to the measure of PB. Especially, it is preferred that a sensitivity to increase the TMF in response to the change in the flow rate is adjusted in response to the measure of PB. Thus, in this way, if the PB indicates a positive power account, the sensitivity to increase TMF is higher than if the PB indicates a negative power account. Such scheme serves to manage the available power from the power source. As an example, if the PB indicates a positive power account, a change in flow rate of 50% may result in a TMF of 1/4 Hz, whereas the same change in flow rate of 50% may result in a TMF of 1/8 Hz, if the PB indicates a negative power account. This variable flow rate change sensitivity may be implemented in various ways in a TMF calculation algorithm.

The TMF is preferably gradually decreased over time irrespective of the measure of change in at least one of: 1) the flow rate, and 2) the inlet or outlet temperatures being below a predetermined threshold, such as the measure of change being zero or approximately zero. Hereby, e.g. a stepwise reduction of TMF over time can be obtained, thereby keeping the TMF high enough to capture further sudden changes in flow rate and/or temperature(s). Based on the insight of the inventors, such gradually returning from a high TMF mode of operation to a low TMF mode of operation, irrespective of the fact that e.g. flow rate has stabilized (i.e. zero change), is preferred. This is due to the fact that in many practical situations, a change in temperature(s) will often be delayed in relation to a sudden change in flow rate, and thus such delayed changes in temperature(s) will then be more precisely captured with a TMF which is kept at a rather high level over a period of time following a detected change in the flow rate. This allows a precise measurement of consumed energy based on the measured flow rate and temperature(s) even in time periods with fluctuations in flow rate and temperature(s).

In preferred embodiments, the consumption meter is a heat meter or a cooling meter arranged for fixed installation at the consumer site.

According to a second aspect, the invention provides a method of measuring energy consumption of a fluid supplied to a consumer at a consumer site, with a consumption meter comprising a temperature measurement unit and a calculator unit electrically powered by a self-contained power source, the method comprising repeatedly:
- measuring the flow rate of the fluid supplied with a flow rate measurement frequency,
- determining a measure of change in at least one of: 1) the flow rate, and 2) inlet or outlet temperatures,
- calculating a measure of power source energy balance,
- determining a TMF in response to said measure of change and the measure of power source energy balance,
- measuring the inlet and outlet temperatures of the fluid supplied with the TMF, and
- calculating a measure of energy consumption of the fluid supplied to the consumer according to the measured flow rate and the measured inlet and outlet temperatures.

Similar considerations as with the consumption meter of the first aspect of the invention apply to the method of the second aspect of the invention.

In general the various aspects of the invention may be combined and coupled in any way possible within the scope of the invention. These and other aspects, features and/or advantages of the invention will be apparent from and elucidated with reference to the embodiment described hereinafter.

### BRIEF DESCRIPTION OF THE DRAWINGS

An embodiment of the invention will be described, by way of example only, with reference to the drawings, in which:
Fig. 1 shows a block diagram of a consumption meter embodiment,
Fig. 2 shows a graph of an example of the shifting of temperature measurement frequencies (TMF) with flow rate changes of a heat meter embodiment,
Figs. 3-6 show block diagrams of TMF algorithm embodiments with different levels of details,
Fig. 7 shows an example of a gradual decrease in TMF after the flow rate has decrease to a stabilized level, and
Fig. 8 shows steps of a method embodiment.

### DESCRIPTION OF AN EMBODIMENT

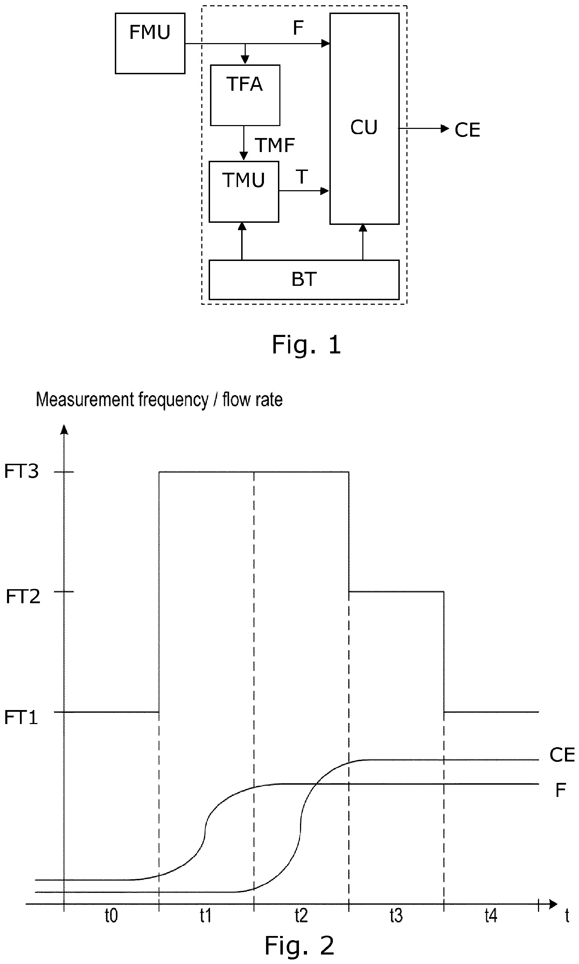

Fig. 1 illustrates parts of a heat meter embodiment divided in two units: a flow rate measuring unit FMU for measuring a flow rate F of the supplied fluid and another unit indicated by the dashed box. This other unit comprises a temperature measuring unit TMU comprising separate temperature sensors for measuring inlet and outlet temperatures T of the supplied fluid, a calculator unit CU for receiving data from the flow measuring unit FMU and the temperature measuring unit TMU and being arranged for calculating a measure of energy consumption CE of the fluid supplied to the consumer accordingly. A battery BT, e.g. a lithium battery, supplies electric power to the temperature measuring unit TMU and the calculator unit CU. In more compact meter embodiments, the flow measuring unit FMU may be combined with the other elements thus forming one single unit with all components and having a fluid flow inlet and a fluid flow outlet arranged for connection to a utility piping system at a fixed position at a consumer site. In such embodiments, the flow measuring unit FMU is preferably also powered by the battery BT.

The measure of energy consumption CE may be communicated by a display as well as by a radio frequency communication module (not shown). The communication module may also be powered by the battery BT.

According to the invention, the heat meter embodiment comprises a temperature measurement frequency algorithm TFA which repeatedly calculates a measure of power source energy balance (PB), and determines a temperature measurement frequency TMF in response to a change in flow rate based on flow rate measurements F from the flow rate measuring unit FMU, e.g. determined as a percentage of change between the two latest measured flow rates F in combination with the PB. This PB is preferably updated taking into account the actual TMF, e.g. by updating a power or energy account which influences the sensitivity in the algorithm TFA to respond to changes in flow rate F. In response, the temperature measurement frequency algorithm TFA calculates a TMF which is then applied to the temperature measuring unit TMU which shifts its repeated temperature measurements to adopt the new TMF accordingly.

Fig. 2 shows examples of graphs indicating the result of an embodiment of the invention. The graphs indicate examples of resulting TMFs determined as a function of flow rate changes F. Further, the correspondingly calculated consumed energy CE of the supplied fluid is shown during five time intervals t0-t4 for a heat meter embodiment under various conditions.

During t0, no changes are observed with the flow rate F, and also the calculated consumed energy CE is seen to be constant. Therefore, the temperature measurement frequency TMF is low FT1. At the onset of the next time interval t1, and throughout t1, a change in the flow rate F is measured with the heat meter. In response hereto, the TMF is shifted from FT1 to a higher measurement frequency FT3. At the onset of the next time interval t2, and throughout t2, a change in the calculated consumed energy CE is measured with the heat meter. The TMF algorithm is designed to maintain the high TMF of FT3 for a period of time after an event of a high change in flow rate F, even though the flow rate F has stabilized, which would otherwise trigger the heat meter to revert to a lower measurement frequency, such as to FT1. Hereby, a delayed fluid temperature change compared to the change in flow rate can be more precisely measured, and consequently the change in consumed energy CE in this event can be precisely measured due to the high TMF of FT3. Moving into the time interval t3, both of the flow rate F and the consumed energy CE have stabilized, and the measurement frequency is shifted now to FT2, which is an intermediate measurement frequency between FT3 and FT1. The TMF algorithm is designed to only slowly decrease the TMF, thereby allowing rather precisely capturing any temperature changes which may follow delayed after a change in flow rate F. Moving into the final time interval t4, the stabilized flow rate F and consumed energy CE are maintained, and the TMF is now further shifted to the initial low value FT1, e.g. a power source saving mode of operation.

The role of the power balance in determining TMF is not illustrated in Fig. 2. Preferably, the way of implementing the power balance in an algorithm for determining TMF is to implement an adjustment of sensitivity to respond to a change in flow rate. Thus, if the power balance indicates a "low" power account value, a larger change in flow rate is required to shift to FT3 than compared to a situation where the power balance indicates that the power account value is "high". Especially, this may be implemented such that the algorithm repeatedly, e.g. every 1 second, keeps track on the power balance in the form of a power account which is updated in response to an estimated average power used for temperature measurements compared to a budgeted power. Here, the budgeted power is preferably determined based on an expected energy to be used per update time interval, in the case where a constant energy is used throughout the lifetime of the power source. Especially, such scheme is preferably combined with the possibility to select a high TMF, FT3, which ensures high measurement precision but consumed more energy than possible in average over a long period of time, and the possibility to select a low TMF, FT1, which consumes less power than available in average over a long period of time, i.e. an economy mode of operation. Hereby battery lifetime as well as a high measurement precision can be obtained.

The meter embodiment in Fig. 1 can be implemented on known consumption meter platforms, since the role of the TFA can be implemented as an algorithm which can be executed on the processor being available in known meters for controlling the operation of the meter and for performing the necessary calculations.

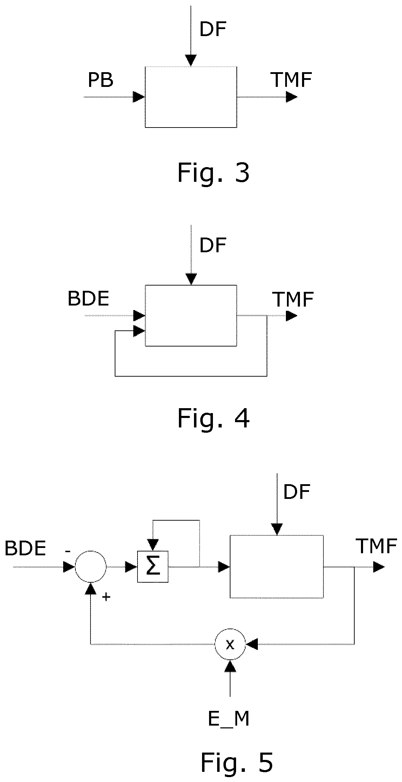

Figs. 3-6 serve to gradually illustrate more details of possible ways to implement a TMF algorithm.

Fig. 3 indicates a basic preferred principle of an embodiment, where an algorithm serves to repeatedly calculate a TMF in response to a measure of power source energy balance PB and a change in flow rate DF, e.g. a percentage of flow rate change between the two latest flow rate measurements.

Fig. 4 illustrates a preferred embodiment, where the TMF algorithm repeatedly updates a power source power balance by administering a power account, where, at each updating time interval, a predetermined budgeted power or energy balance value BDE is updated to the power account. The algorithm further updates the power account with an estimate of the power consumption based on the actually determined TMF, and this is indicated by a feedback arrow.

By calculating a power balance measure update, e.g. every 1 second or so, rather than counting down in an overall counted based on an expected total available energy in the power source (battery) during its lifetime, the algorithm can function without the need for an input regarding the actual state of the battery, and without keeping track of a power balance during the entire battery life time. A margin for product tolerances to provide a guaranteed battery lifetime can be taken into account in the selection of the predetermined value BDE.

Fig. 5 illustrates in more details a possible implementation of the power balance based on the mentioned predetermined budgeted power or energy balance value BDE with a summation unit serving to update a power or energy account and providing an input accordingly to the TMF algorithm. Preferably, this is implemented by the output from said power or energy account to adjust a sensitivity to changes in flow rate DF in its determination of resulting TMF. As seen, the estimated actual power consumption with the determined TMF is taken into account by feeding back a value as a result of a multiplication of an estimated power or energy per temperature measurement E M and the actual TMF.

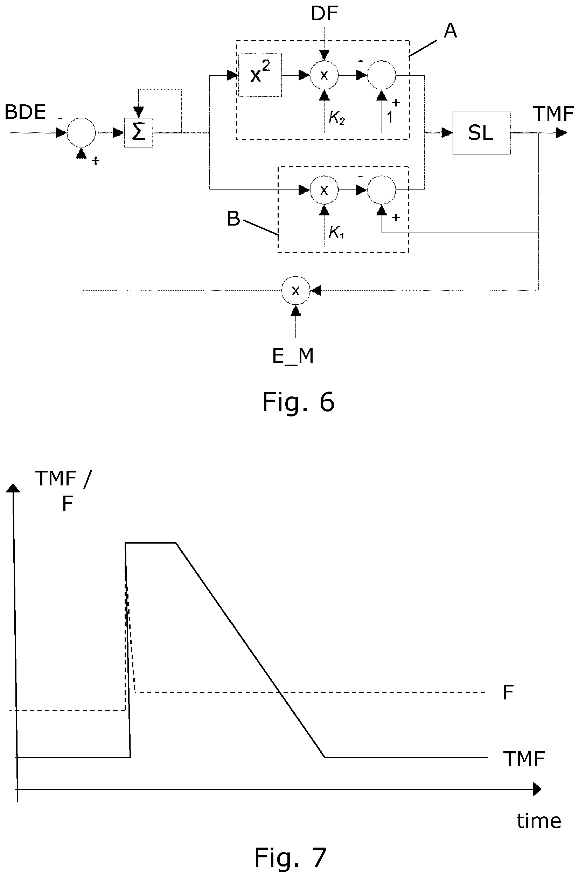

Fig. 6 shows in even more detail how the flow rate change DF sensitivity adjustment can be implemented, namely indicated by the processing steps in the dashed box A including a constant K₂. Further, the dashed box B together with the selection function SL, serves to ensure that TMF is gradually decreased over time irrespective of the change in the flow rate DF, which may result in an output from box A which suggests a very low TMF immediately after a change in flow rate DF has become low or zero. In such case dashed box B including a constant K₁ may suggest a higher TMF value, and the selection function SL then selects the highest TMF of the two. Hereby, the branch including the dashed box B helps to maintain a rather high TMF and gradually decreases the TMF over a period of time, even though the change in flow rate DF has become zero and has stabilized at this state. This has shown to be preferred to ensure a high precision in calculated consumed energy, since the temperature changes in practice may be delayed compared to changes in flow rate DF.

The algorithm in Fig. 6 is a very specific way of implementing a TMF calculation algorithm based on a measure of power balance PB and a change in flow rate DF. However, it is to be understood that the basic principles of combining battery power balance PB and adaptive TMF in response to change in flow rate DF can be implemented by means of a large variety of more or less complicated algorithms.

Fig. 7 illustrates an example of the functionality of the TMF algorithm in Fig. 6, especially box B, in case a high change in flow rate F is observed over a short period of time, followed by a stabilized flow rate F (zero change in flow rate DF). As seen, the algorithm responds to the sudden change in flow rate F by increasing TMF to a high value, but in spite the flow rate F stabilizes, the TMF is gradually decreased until the initial low TMF value has reached.

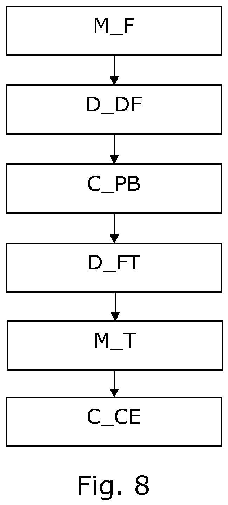

Fig. 8 illustrates steps of a method embodiment of measuring energy consumption of a fluid supplied to a consumer at a consumer site, with a consumption meter comprising a temperature measurement unit and a calculator unit electrically powered by a self-contained power source. The method comprises repeatedly:
- measuring M_F the flow rate of the fluid supplied with a flow rate measurement frequency,
- determining D_DF a measure of change in the flow rate,
- calculating C_PB a measure of power source energy balance,
- determining D_FT a TMF in response to said measure of change in the flow rate and the measure of power source energy balance,
- measuring M_T the inlet and outlet temperatures of the fluid supplied with the temperature measurement frequency, and
- calculating C_CE a measure of energy consumption of the fluid supplied to the consumer according to the measured flow rate and the measured inlet and outlet temperatures, e.g. based on a product between flow rate and a difference in inlet and outlet temperatures.

In a specific heat meter embodiment, the minimum TMF is 1/64 or 1/32 Hz and the maximum TMF is ¼, ½ or 1 Hz, and the measure of power balance is updated once every 1 second. The TMF may be calculated to have a value ensuring temperature measurements to occur .

It is to be understood that these repeated steps can be performed in a sequence order which is different from the one indicated above, and the repeated execution of the individual steps may be at regular or non-regular time intervals, and the execution of the individual steps may be temporally synchronized or non-synchronized with each other.

To sum up, the invention provides a consumption meter for measuring energy consumption CE of a fluid supplied to a consumer at a consumer site. The meter has a flow measuring unit FMU for measuring flow rate F, a temperature measuring unit TMU for measuring inlet and outlet temperatures T, and a calculator unit CU for calculating energy consumption CE based on the flow rate F and temperatures T. A battery BT supplies electric power to vital parts of the meter. The meter is arranged to repeatedly determine a measure of change in one or both of: 1) the flow rate F, and 2) the inlet or outlet temperatures T, to calculate a measure of power balance PB for estimated power drawn from the battery BT, and to determine a temperature measurement frequency TMF in response to the measure of change and the measure of power balance PB. This allows the meter to adaptively adjust the rate of the electric power consuming temperature measurements in response to actual flow and/or temperature conditions and taking into account the amount of power drawn from the battery BT. Especially, a TMF algorithm TFA may reduce its sensitivity to respond by a high TMF in case a given change in flow rate DF is measured in response to the power balance PB. Such meter allows a combination of high precision measurements when required by the conditions, and still it is possible to manage electric power consumed to ensure a long battery BT lifetime, since power can be saved in periods where the conditions allow a reduced TMF.

Although the present invention has been described in connection with the specified embodiment, it should not be construed as being in any way limited to the presented examples. The invention can be implemented by any suitable means; and the scope of the present invention is to be interpreted in the light of the accompanying claim set.

## Claims

1. A consumption meter for measuring energy consumption (CE) of a fluid supplied to a consumer at a consumer site, the consumption meter comprising:
- a flow measuring unit (FMU) for measuring a flow rate (F) of the supplied fluid,
- a temperature measuring unit (TMU) for measuring inlet and outlet temperatures (T) of the supplied fluid,
- a calculator unit (CU) for receiving data from the flow measuring unit (FMU) and the temperature measuring unit (T) and being arranged for calculating a measure of energy consumption (CE) of the fluid supplied to the consumer accordingly,
- a self-contained power source (BT) arranged for supplying electric power to at least the temperature measuring unit (TMU) and the calculator unit (CA) and,
wherein the consumption meter is arranged to repeatedly:
- measure the flow rate (F) with a flow rate measurement frequency (FF),
- determine a measure of change in at least one of: 1) the flow rate (F), and 2) the inlet or outlet temperatures (T),
- calculate a measure of power source energy balance (PB),
- determine a temperature measurement frequency (TMF) in response to said measure of change (DF) and the measure of power source energy balance (PB),
- measure the inlet and outlet temperatures (T) with the temperature measurement frequency (TMF), and
- calculate a measure of energy consumption (CE) of the fluid supplied to the consumer according to the measured flow rate (F) and the measured inlet and outlet temperatures (T).

2. The consumption meter according to claim 1, wherein the temperature measurement frequency (TMF) is calculated as a value in response to the measure of change in the flow rate (DF) and the measure of power source energy balance (PB).

3. The consumption meter according to claim 1 or 2, wherein the temperature measurement frequency (TMF) is calculated according to a predetermined algorithm (TFA).

4. The consumption meter according to any of the preceding claims, wherein the power source energy balance (PB) is calculated in response to a measure of budgeted average power source energy consumption (BDE) and a measure of estimated power source energy consumption with the determined temperature measurement frequency (TMF).

5. The consumption meter according to any of the preceding claims, wherein the temperature measurement frequency (TMF) is determined to be below or equal to a maximum temperature measurement frequency (FT3), and wherein said maximum temperature measurement frequency (FT3) is selected such that an estimated power source energy consumption with the maximum temperature measurement frequency (FT3) exceeds a budgeted average power source energy consumption (BDE).

6. The consumption meter according to any of the preceding claims, wherein the temperature measurement frequency (TMF) is determined to be above or equal to a minimum temperature measurement frequency (FT1), and wherein said minimum measurement frequency (FT1) is selected such that a budgeted average power source energy consumption (BDE) exceeds an estimated power source energy consumption with the minimum temperature measurement frequency (FT1).

7. The consumption meter according to any of the preceding claims, wherein said maximum temperature measurement frequency (FT3) is determined repeatedly in response to the measure of power source energy balance (PB).

8. The consumption meter according to any of the preceding claims, wherein the consumption meter is arranged to measure inlet and outlet temperatures (T) at least at three different temperature measurement frequencies (FT1, FT2, FT3).

9. The consumption meter according to any of the preceding claims, wherein the temperature measurement frequency (TMF) is calculated according to a predetermined algorithm which calculates an integer value indicative of temperature measurement period time in seconds.

10. The consumption meter according to any of the preceding claims, wherein the consumption meter is further arranged to repeatedly determine a flow rate measurement frequency (FF) in response to the measure of power source energy balance (PB) and a measure of change in at least one of: 1) the flow rate (F), and 2) the inlet or outlet temperatures (T).

11. The consumption meter according to any of the preceding claims, wherein the temperature measurement frequency (TMF) is repeatedly determined with a fixed time interval.

12. The consumption meter according to any of the preceding claims, wherein the measure of power source energy balance (PB) is repeatedly calculated with a fixed time interval.

13. The consumption meter according to any of the preceding claims, wherein the temperature measurement frequency (TMF) is determined according to an algorithm wherein a sensitivity to increase the temperature measurement frequency (TMF) in response to the change in the at least one of: 1) the flow rate (DF), and 2) the inlet or outlet temperatures (T) is adjusted in response to the measure of power source energy balance (PB).

14. The consumption meter according to any of the preceding claims, wherein the temperature measurement frequency (TMF) is gradually decreased over time irrespective of the measure of change in the at least one of: 1) the flow rate (F), and 2) the inlet or outlet temperatures (T) being below a predetermined threshold.

15. A method of measuring energy consumption of a fluid supplied to a consumer at a consumer site, with a consumption meter comprising a temperature measurement unit and a calculator unit electrically powered by a self-contained power source, the method comprising repeatedly:
- measuring (M_F) the flow rate (F) of the fluid supplied with a flow rate measurement frequency (FF),
- determining (D_DF) a measure of change in at least one of: 1) the flow rate (F), and 2) inlet or outlet temperatures (T),
- calculating (C_PB) a measure of power source energy balance (PB),
- determining (D_FT) a temperature measurement frequency (TMF) in response to said measure of change (DF) and the measure of power source energy balance (PB),
- measuring (M_T) the inlet and outlet temperatures (T) of the fluid supplied with the temperature measurement frequency (TMF), and
- calculating (C_CE) a measure of energy consumption of the fluid supplied to the consumer according to the measured flow rate (F) and the measured inlet and outlet temperatures (T).

## Patentansprüche

1. Verbrauchsmesser zum Messen von Energieverbrauch (CE) eines Fluids, das an einen Verbraucher an einem Verbraucherort bereitgestellt wird, der Verbrauchsmesser umfassend:
- eine Durchflussmesseinheit (FMU) zum Messen einer Durchflussrate (F) des bereitgestellten Fluids,
- eine Temperaturmesseinheit (TMU) zum Messen von Einlass- und Auslasstemperaturen (T) des bereitgestellten Fluids,
- eine Rechnereinheit (CU) zum Empfangen von Daten von der Durchflussmesseinheit (FMU) und der Temperaturmesseinheit (T) und angeordnet zum Berechnen eines Maßes von Energieverbrauch (CE) des Fluids, das entsprechend an den Verbraucher bereitgestellt wird,
- eine unabhängige Leistungsquelle (BT), abgeordnet zum Bereitstellen von elektrischer Leistung an zumindest die Temperaturmesseinheit (TMU) und die Rechnereinheit (CA), und
wobei der Verbrauchsmesser dazu angeordnet ist, Folgendes wiederholt durchzuführen:
- die Durchflussrate (F) mit einer Durchflussratenmessfrequenz (FF) zu messen,
- ein Maß von Änderung bei zumindest einem der Folgenden zu bestimmen: 1) der Durchflussrate (F), und 2) den Einlass- oder Auslasstemperaturen (T),
- ein Maß von Leistungsquellenenergiebilanz (PB) zu berechnen,
- eine Temperaturmessfrequenz (TMF) als Reaktion auf das Maß von Änderung (DF) und das Maß von Leistungsquellenenergiebilanz (PB) zu bestimmen,
- die Einlass- und Auslasstemperaturen (T) mit der Temperaturmessfrequenz (TMF) zu messen, und
- ein Maß von Energieverbrauch (CE) des an den Verbraucher bereitgestellten Fluids gemäß der gemessenen Durchflussrate (F) und den gemessenen Einlass- und Auslasstemperaturen (T) zu berechnen.

2. Verbrauchsmesser nach Anspruch 1, wobei die Temperaturmessfrequenz (TMF) als ein Wert als Reaktion auf das Maß von Änderung bei der Durchflussrate (DF) und das Maß von Leistungsquellenenergiebilanz (PB) berechnet ist.

3. Verbrauchsmesser nach Anspruch 1 oder 2, wobei die Temperaturmessfrequenz (TMF) gemäß einem vorbestimmten Algorithmus (TFA) berechnet ist.

4. Verbrauchsmesser nach einem der vorhergehenden Ansprüche, wobei die Leistungsquellenenergiebilanz (PB) als Reaktion auf ein Maß von geplantem mittlerem Leistungsquellenenergieverbrauch (BDE) und ein Maß von geschätztem Leistungsquellenenergieverbrauch mit der bestimmten Temperaturmessfrequenz (TMF) berechnet ist.

5. Verbrauchsmesser nach einem der vorhergehenden Ansprüche, wobei die Temperaturmessfrequenz (TMF) so bestimmt ist, dass sie kleiner als oder gleich einer maximalen Temperaturmessfrequenz (FT3) ist, und wobei die maximale Temperaturmessfrequenz (FT3) so ausgewählt ist, dass ein geschätzter Leistungsquellenenergieverbrauch mit der maximalen Temperaturmessfrequenz (FT3) einen geplanten mittleren Leistungsquellenenergieverbrauch (BDE) übersteigt.

6. Verbrauchsmesser nach einem der vorhergehenden Ansprüche, wobei die Temperaturmessfrequenz (TMF) so bestimmt ist, dass sie größer als oder gleich einer minimalen Temperaturmessfrequenz (FT1) ist, und wobei die minimale Messfrequenz (FT1) so ausgewählt ist, dass eine geplanter mittlerer Leistungsquellenenergieverbrauch (BDE) einen geschätzten Leistungsquellenenergieverbrauch mit der minimalen Temperaturmessfrequenz (FT1) übersteigt.

7. Verbrauchsmesser nach einem der vorhergehenden Ansprüche, wobei die maximale Temperaturmessfrequenz (FT3) wiederholt als Antwort auf das Maß von Leistungsquellenenergiebilanz (PB) bestimmt ist.

8. Verbrauchsmesser nach einem der vorhergehenden Ansprüche, wobei der Verbrauchsmesser dazu angeordnet ist, Einlass- und Auslasstemperaturen (T) zumindest bei drei unterschiedlichen Temperaturmessfrequenzen (FT1, FT2, FT3) zu messen.

9. Verbrauchsmesser nach einem der vorhergehenden Ansprüche, wobei die Temperaturmessfrequenz (TMF) gemäß einem vorbestimmten Algorithmus berechnet ist, der einen ganzzahligen Wert berechnet, der den Temperaturmesszeitraum in Sekunden angibt.

10. Verbrauchsmesser nach einem der vorhergehenden Ansprüche, wobei der Verbrauchsmesser ferner dazu angeordnet ist, eine Durchflussratenmessfrequenz (FF) als Reaktion auf das Maß von Leistungsquellenenergiebilanz (PB) und ein Maß von Änderung von zumindest einem der Folgenden wiederholt zu bestimmen: 1) der Durchflussrate (F), und 2) den Einlass- oder Auslasstemperaturen (T).

11. Verbrauchsmesser nach einem der vorhergehenden Ansprüche, wobei die Temperaturmessfrequenz (TMF) mit einem festen Zeitintervall wiederholt bestimmt ist.

12. Verbrauchsmesser nach einem der vorhergehenden Ansprüche, wobei das Maß von Leistungsquellenenergiebilanz (PB) mit einem festen Zeitintervall wiederholt bestimmt ist.

13. Verbrauchsmesser nach einem der vorhergehenden Ansprüche, wobei die Temperaturmessfrequenz (TMF) gemäß einem Algorithmus bestimmt ist, wobei eine Empfindlichkeit, die Temperaturmessfrequenz (TMF) als Reaktion auf die Änderung von zumindest einem der Folgenden: 1) der Durchflussrate (DF), und 2) den Einlass- und Auslasstemperaturen (T) zu erhöhen, als Reaktion auf das Maß von Leistungsquellenenergiebilanz (PB) eingestellt ist.

14. Verbrauchsmesser nach einem der vorhergehenden Ansprüche, wobei die Temperaturmessfrequenz (TMF) unabhängig davon, ob das Maß von Änderung von zumindest einem der Folgenden: 1) der Durchflussrate (F), und 2) den Einlass- oder Auslasstemperaturen (T) unter einem vorbestimmten Schwellenwert liegt, schrittweise im Zeitverlauf abnimmt.

15. Verfahren zum Messen von Energieverbrauch eines an eine Verbraucherstelle bereitgestellten Fluids, mit einem Verbrauchsmesser umfassend eine Temperaturmesseinheit und eine Rechnereinheit, elektrisch von einer unabhängigen Stromquelle angetrieben, wobei das Verfahren Folgendes wiederholt umfasst:
- Messen (M_F) der Durchflussrate (F) des bereitgestellten Fluids mit einer Durchflussratenmessfrequenz (FF),
- Bestimmen (D_DF) eines Maßes von Änderung bei zumindest einem der Folgenden: 1) der Durchflussrate (F), und 2) Einlass- oder Auslasstemperaturen (T),
- Berechnen (C_PB) eines Maßes von Leistungsquellenenergiebilanz (PB),
- Bestimmen (D_FT) einer Temperaturmessfrequenz (TMF) als Reaktion auf das Maß von Änderung (DF) und das Maß von Leistungsquellenenergiebilanz (PB),
- Messen (M_T) der Einlass- und Auslasstemperaturen (T) des bereitgestellten Fluids mit der Temperaturmessfrequenz (TMF), und
- Berechnen (C_CE) eines Maßes von Energieverbrauch des an den Verbraucher bereitgestellten Fluids gemäß der gemessenen Durchflussrate (F) und den gemessenen Einlass- und Auslasstemperaturen (T).

## Revendications

1. Compteur de consommation pour mesurer la consommation d'énergie (CE) d'un fluide fourni à un consommateur à un site consommateur, le compteur de consommation comprenant :
- une unité de mesure de débit (FMU) pour mesurer un débit (F) du fluide fourni,
- une unité de mesure de température (TMU) pour mesurer les températures d'entrée et de sortie (T) du fluide fourni,
- une unité calculatrice (CU) pour recevoir les données de l'unité de mesure de débit (FMU) et de l'unité de mesure de température (T) et étant agencée pour calculer une mesure de consommation d'énergie (CE) du fluide fourni au consommateur de manière correspondante,
- une source d'alimentation électrique autonome (BT) agencée pour fournir le courant électrique au moins à l'unité de mesure de température (TMU) et à l'unité calculatrice (CA) et,
le compteur de consommation étant agencé pour, à plusieurs reprises:
- mesurer le débit (F) avec une fréquence de mesure du débit (FF),
- déterminer une mesure de changement dans au moins l'un de : 1) le débit (F), et 2) les températures d'entrée ou de sortie (T),
- calculer une mesure d'équilibre d'énergie de la source d'alimentation électrique (PB),
- déterminer une fréquence de mesure de température (TMF) en réponse à ladite mesure de changement (DF) et à la mesure d'équilibre d'énergie de la source d'alimentation électrique (PB),
- mesurer les températures d'entrée et de sortie (T) avec la fréquence de mesure de température (TMF), et
- calculer une mesure de consommation d'énergie (CE) du fluide fourni au consommateur selon le débit mesuré (F) et les températures d'entrée et de sortie mesurées (T).

2. Compteur de consommation selon la revendication 1, dans lequel la fréquence de mesure de température (TMF) est calculée comme une valeur en réponse à la mesure de changement dans le débit (DF) et à la mesure d'équilibre d'énergie de la source d'alimentation électrique (PB).

3. Compteur de consommation selon la revendication 1 ou 2, dans lequel la fréquence de mesure de température (TMF) est calculée conformément à un algorithme prédéterminé (TFA).

4. Compteur de consommation selon l'une quelconque des revendications précédentes, dans lequel l'équilibre d'énergie de la source d'alimentation électrique (PB) est calculé en réponse à une mesure de consommation d'énergie de la source d'alimentation électrique moyenne prévue dans un budget (BDE) et à une mesure de consommation d'énergie estimée de la source d'alimentation électrique avec la fréquence de mesure de température déterminée (TMF).

5. Compteur de consommation selon l'une quelconque des revendications précédentes, dans lequel la fréquence de mesure de température (TMF) est déterminée comme étant inférieure ou égale à une fréquence de mesure de température maximale (FT3), et dans lequel ladite fréquence de mesure de température maximale (FT3) est sélectionnée de telle sorte qu'une consommation d'énergie estimée de la source d'alimentation électrique avec la fréquence de mesure de température maximale (FT3) dépasse une consommation d'énergie de la source d'alimentation électrique moyenne prévue dans un budget (BDE).

6. Compteur de consommation selon l'une quelconque des revendications précédentes, dans lequel la fréquence de mesure de température (TMF) est déterminée pour être supérieure ou égale à une fréquence de mesure de température minimale (FT1), et dans lequel ladite fréquence de mesure minimale (FT1) est sélectionnée de telle sorte qu'une consommation d'énergie de la source d'alimentation électrique moyenne prévue dans un budget (BDE) dépasse une consommation d'énergie estimée de la source d'alimentation électrique avec la fréquence de mesure de température minimale (FT1).

7. Compteur de consommation selon l'une quelconque des revendications précédentes, dans lequel ladite fréquence de mesure de température maximale (FT3) est déterminée à plusieurs reprises en réponse à la mesure d'équilibre d'énergie de la source d'alimentation électrique (PB).

8. Compteur de consommation selon l'une quelconque des revendications précédentes, le compteur de consommation étant agencé pour mesurer les températures d'entrée et de sortie (T) à au moins trois fréquences de mesure de température différentes (FT1, FT2, FT3).

9. Compteur de consommation selon l'une quelconque des revendications précédentes, dans lequel la fréquence de mesure de température (TMF) est calculée conformément à un algorithme prédéterminé qui calcule une valeur entière indiquant la durée de mesure de température en secondes.

10. Compteur de consommation selon l'une quelconque des revendications précédentes, le compteur de consommation étant en outre agencé pour déterminer à plusieurs reprise une fréquence de mesure de débit (FF) en réponse à la mesure d'équilibre d'énergie de la source d'alimentation électrique (PB) et à une mesure de changement dans au moins l'un de : 1) le débit (F), et 2) les températures d'entrée ou de sortie (T).

11. Compteur de consommation selon l'une quelconque des revendications précédentes, dans lequel la fréquence de mesure de température (TMF) est déterminée à plusieurs reprises avec un intervalle de temps fixe.

12. Compteur de consommation selon l'une quelconque des revendications précédentes, dans lequel la mesure d'équilibre d'énergie de la source d'alimentation électrique (PB) est calculée à plusieurs reprises avec un intervalle de temps fixe.

13. Compteur de consommation selon l'une quelconque des revendications précédentes, dans lequel la fréquence de mesure de température (TMF) est déterminée conformément à un algorithme dans lequel une sensibilité pour augmenter la fréquence de mesure de température (TMF) en réponse au changement dans au moins l'un de : 1) le débit (DF), et 2) les températures d'entrée ou de sortie (T) est ajustée en réponse à la mesure d'équilibre d'énergie de la source d'alimentation électrique (PB).

14. Compteur de consommation selon l'une quelconque des revendications précédentes, dans lequel la fréquence de mesure de température (TMF) est réduite graduellement avec le temps, que la mesure du changement dans au moins un parmi : 1) le débit (F) et 2) les températures d'entrée ou de sortie (T) étant en dessous d'un seuil prédéterminé.

15. Procédé de mesure de consommation d'énergie d'un fluide fourni à un consommateur à un site consommateur, avec un compteur de consommation comprenant une unité de mesure de température et une unité calculatrice alimentée électriquement par une source d'alimentation électrique autonome, le procédé comprenant, à plusieurs reprises, les étapes consistant à :
- mesurer (M_F) le débit (F) du fluide fourni avec une fréquence de mesure du débit (FF),
- déterminer (D_DF) une mesure de changement dans au moins l'un de : 1) le débit (F), et 2) les températures d'entrée ou de sortie (T),
- calculer (C_PB) une mesure d'équilibre d'énergie de la source d'alimentation électrique (PB),
- déterminer (D_FT) une fréquence de mesure de température (TMF) en réponse à ladite mesure de changement (DF) et à la mesure d'équilibre d'énergie de la source d'alimentation électrique (PB),
- mesurer (M_T) les températures d'entrée et de sortie (T) du fluide fourni avec la fréquence de mesure de température (TMF), et
- calculer (C_CE) une mesure de consommation d'énergie du fluide fourni au consommateur selon le débit mesuré (F) et les températures d'entrée et de sortie mesurées (T).
